# EUROPEAN PATENT SPECIFICATION

(11) **EP 4 369 486 B1**
(45) Date of publication and mention of the grant of the patent: **06.05.2026**
(21) Application number: 22893127.5
(22) Date of filing: 07.11.2022
(51) Int. Cl.: H01M 50/233, H01M 10/653, H01M 50/227, H01M 50/213, H01M 10/6554, H01M 10/643, H01M 10/613

(54) **BATTERY MODULE AND BATTERY PACK INCLUDING THE SAME**
BATTERIEMODUL UND BATTERIEPACK DAMIT
MODULE DE BATTERIE ET BLOC-BATTERIE LE COMPRENANT

(30) Priority: 15.11.2021 KR 20210156325; 04.11.2022 KR 20220145759
(43) Date of publication of application: 15.05.2024
(73) Proprietor: LG Energy Solution, Ltd., Seoul 07335 (KR)
(72) Inventor: CHOI, Jong Chul, Daejeon 34122 (KR)
(74) Representative: Plasseraud IP
(86) International application number: PCT/KR2022/017332
(87) International publication number: WO 2023/085706

(56) References cited:
- CN-U- 206 134 883
- JP-A- 2018 081 795
- KR-A- 20100 100 943
- US-A1- 2016 336 565
- US-A1- 2016 336 565
- US-A1- 2018 316 071
- US-A1- 2019 267 584
- US-A1- 2019 386 356
- US-A1- 2020 185 797
- US-A1- 2020 185 798

## Description

The present disclosure relates to a battery module and a battery pack including the same, and more particularly, to a battery module whose process time is reduced, and a battery pack including the same.

### [BACKGROUND]

With the technology development and increased demand for mobile devices, demand for secondary batteries as energy sources has been rapidly increasing. A variety of researches on secondary batteries capable of meeting various needs have been carried out accordingly.

A secondary battery has attracted considerable attention as an energy source for power-driven devices, such as an electric bicycle, an electric vehicle, and a hybrid electric vehicle, as well as an energy source for mobile devices, such as a mobile phone, a digital camera and a laptop computer.

Lithium secondary batteries, which are frequently used among secondary batteries, classified based on the shape of the exterior material into a can-type secondary battery in which the electrode assembly is built into a metal can, and a pouch-type secondary battery in which the electrode assembly is built into a pouch of an aluminum laminate sheet

Among them, the can-type secondary battery can manufacture a metal can for accommodating an electrode assembly in a cylindrical shape. Such a can-type secondary battery is provided with a housing that accommodates multiple secondary batteries, thereby realizing a battery module. However, when the multiple secondary batteries are accommodated in the housing inner space of the battery module without fixing means, the secondary battery is easily movable in the accommodation space inside the housing in an environment where the vehicle equipped with the battery module is subject to frequent vibrations and shocks caused by dropping, which causes problems such as damage to the secondary battery or breakage of the connection between the electrode terminal and the busbar.

US2020185797A1 discloses a battery module. US2019386356A1 discloses a thermal management power battery assembly and battery pack.

### [DETAILED DESCRIPTION OF THE INVENTION]

### [Technical Problem]

It is an object of the present disclosure to provide a battery module whose process time is reduced, and a battery pack including the same.

However, the technical problem to be solved by embodiments of the present disclosure is not limited to the above-described problems, and can be variously expanded within the scope of the technical idea included in the present disclosure.

### [Technical Solution]

According to the invention, there is provided a battery module comprising: a bottom plate, a cell frame located on the bottom plate, a plurality of battery cells mounted to the cell frame, and an adhesive layer located between the bottom plate and the plurality of battery cells, wherein the cell frame has light transmittance.

The adhesive layer may be formed of a photocurable resin.

The cell frame may be formed with a plurality of holes for mounting the battery cells.

The adhesive layer may be formed in the plurality of holes and contacts at least one of the bottom plate and the bottom portion of the battery cell.

The cell frame is formed of a resin that generates total internal reflection into the cell frame.

The resin may have a transmittance of 90% or more.

The battery module further comprises a diffuse reflection member formed on a part of the surface of the cell frame.

The diffuse reflection member may be formed on a boundary surface between the cell frame and the adhesive layer.

A light that entered the cell frame passes through the diffuse reflection member and is emitted to the adhesive layer, so that the adhesive layer can be photo-cured.

The adhesive layer may include a photocuring initiator.

The bottom plate may be a cooling plate.

The battery cell may be cylindrical.

The bottom plate and the cell frame may be integrally formed.

A plurality of light paths may be formed inside the cell frame.

According to another aspect of the present disclosure, there is provided a battery pack comprising the above-mentioned battery module.

### [Advantageous Effects]

According to embodiments, a light-transmitting cell frame having a total reflection function and a photocurable resin are used as an adhesive, thereby capable of reducing a process time.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a diagram showing a battery module according to a comparative example;
Fig. 2 is a diagram showing a method of forming a battery module according to the comparative example of Fig. 1;
Fig. 3 is a diagram showing a battery module according to one embodiment of the present disclosure;
Fig. 4 is a plan view of the cell frame shown in Fig. 3;
Fig. 5 is a diagram showing a method of forming a battery module according to the embodiment of Fig. 3;
Fig. 6 is a diagram showing a state in which the adhesive layer of Fig. 5 is cured; and
Fig. 7 is an enlarged view of region P of Fig. 6.

### [DETAILED DESCRIPTION OF THE EMBODIMENTS]

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

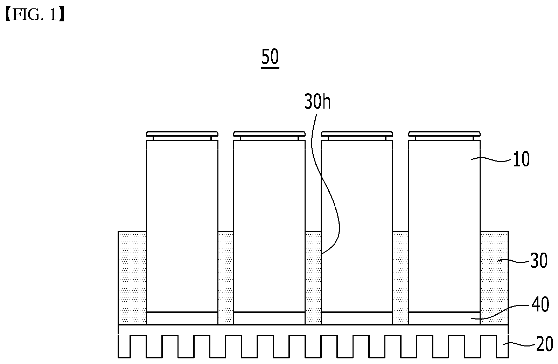

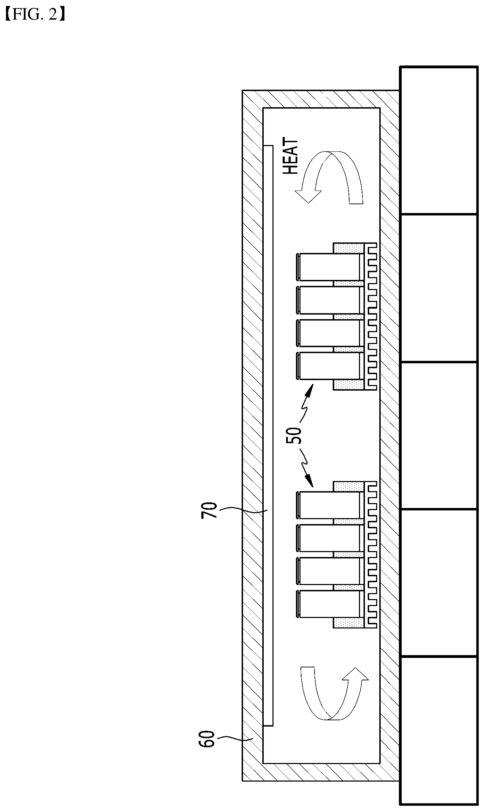

Fig. 1 is a diagram showing a battery module according to a comparative example. Fig. 2 is a diagram showing a method of forming a battery module according to the comparative example of Fig. 1.

Referring to Fig. 1, a battery module 50 according to a comparative example includes a bottom plate 20, a cell frame 30 located on the bottom plate 20, and battery cells 10 mounted in each of the plurality of holes 30h formed in the cell frame 30. At this time, in order to fix the battery cell 10 to the bottom plate 20, the fixing adhesive layer 40 may be formed inside the plurality of holes 30h.

Referring to Fig. 2, at least one battery module 50 can be disposed inside a chamber 60, and heat can be applied to the inside of the chamber 60 via a heater 70 or the like. An adhesive made of a thermosetting resin is applied to the plurality of holes 30h formed in the cell frame 30 shown in Fig. 1, and the adhesive is thermally cured to form an adhesive layer 40 shown in Fig. 1, and the battery cell 10 can be fixed to the bottom plate 20 by the adhesive layer 40. However, it may take a long process time until thermal curing is performed within the chamber 60 to form an adhesive layer 40.

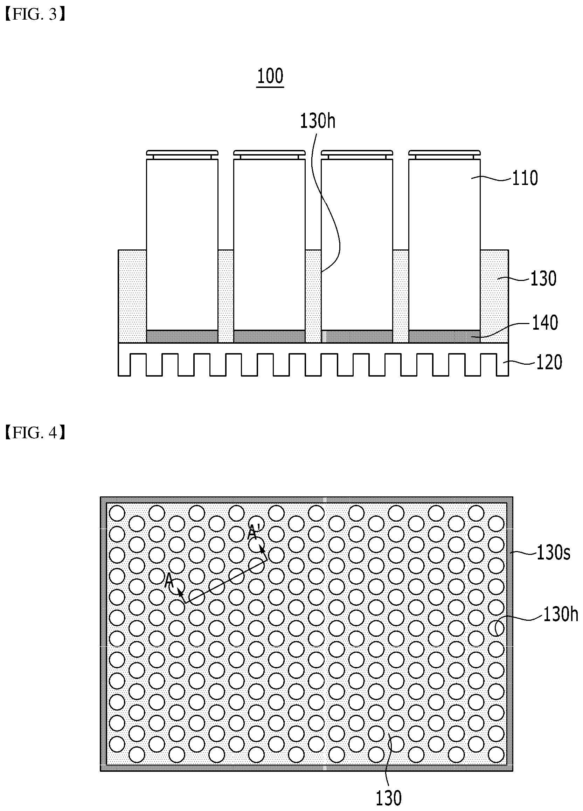

Fig. 3 is a diagram showing a battery module according to one embodiment of the present disclosure. Fig. 4 is a plan view of the cell frame shown in Fig. 3.

Referring to Fig. 3, the battery module 100 according to the present embodiment includes a bottom plate 120, a cell frame 130 located on the bottom plate 120, a plurality of battery cells 110 mounted to the cell frame 130, and an adhesive layer 140 located between the bottom plate 120 and the plurality of battery cells 110. At this time, the adhesive layer 140 may contact at least one of the bottom plate 120 and the bottom portion of the battery cell 110.

The bottom plate 120 according to the present embodiment may be a cooling plate for cooling the battery cell 110. However, the bottom plate 120 itself is not a cooling plate, but is used for supporting the cell frame 130 that accommodates the battery cells 110. A separate heat sink may be formed under the bottom plate 120.

The cell frame 130 according to the present embodiment may have light transmittance. As the cell frame 130 has light transmittance, light generated from the light source unit can pass through the cell frame 130 in a manufacturing method of the battery module 100, which will be described below. The cell frame 130 may have transparent properties. Specifically, the cell frame 130 is made of a resin that generates total internal reflection into the cell frame 130. At this time, the resin may have a transmittance of 90% or more. The resin may be an injection molding resin.

Referring to Figs. 3 and 4, a plurality of holes 130h for mounting the battery cells 110 may be formed in the cell frame 130. The adhesive layer 140 is formed in the plurality of holes 130h so as to contact the bottom plate 120 and the cell frame 130, and the battery cell 110 may be disposed on the adhesive layer 140.

The hole 130h formed in the cell frame 130 according to the present embodiment may be cylindrical, and the battery cell 110 is preferably a cylindrical cell that is suitable for mounting in the cylindrical hole 130h.

The adhesive layer 140 according to the present embodiment may be made of a photocurable resin. At this time, the photocurable resin may be made of acrylic, silicone, epoxy, and the like, and the adhesive layer 140 preferably includes a photocuring initiator. When the photocurable resin constituting the adhesive layer receives light, the adhesive layer 140 is formed while being cured by the photocuring initiator, and the battery cell 110 may be fixed to the cell frame 130 on the bottom plate 120 by the adhesive layer 140.

As shown in Fig. 4, the cell frame 130 may include a portion having holes 130h in which the plurality of battery cells 110 are mounted, and side surface frames 130s. However, the cell frame is not limited thereto, and a cell frame 130 may have a structure in which a portion having holes 130h for mounting the plurality of battery cells 110 and the side surface frames 130s are integrally formed. The battery module 100 shown in Fig. 3 may be a cross-sectional view taken along the line A-A' of Fig. 4.

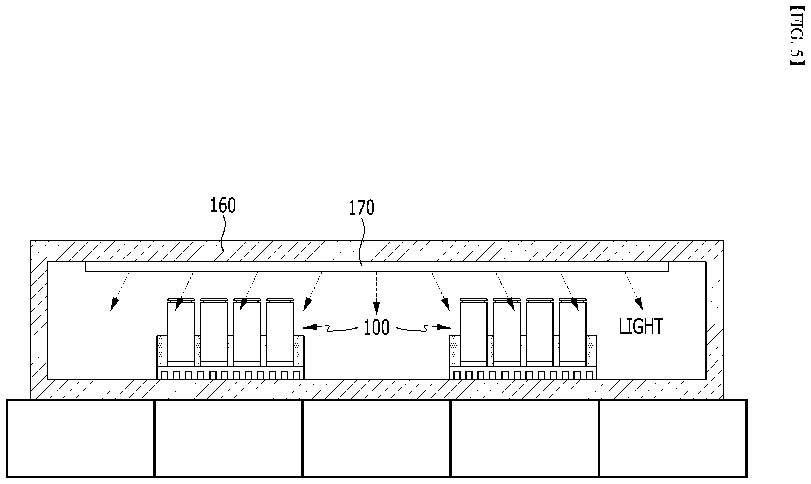

Fig. 5 is a diagram showing a method of forming a battery module according to the embodiment of Fig. 3. In Fig. 5, the battery module 100 disposed inside the chamber 160 shows only a part of the state where the plurality of battery cells 110 are mounted to the cell frame 130 for convenience of description and illustration.

Referring to Figs. 3 and 5, at least one battery module 100 may be disposed inside the chamber 160. A light source unit 170 is formed inside the chamber 160 to irradiate at least one battery module 100 with light. The light source unit 170 is located below the upper end of the chamber 160. As the light is irradiated downward, the light may reach the cell frame 130 of the battery module 100 disposed inside the chamber 160.

The light source unit 170 according to the present embodiment may use an ultraviolet lamp or a halogen lamp.

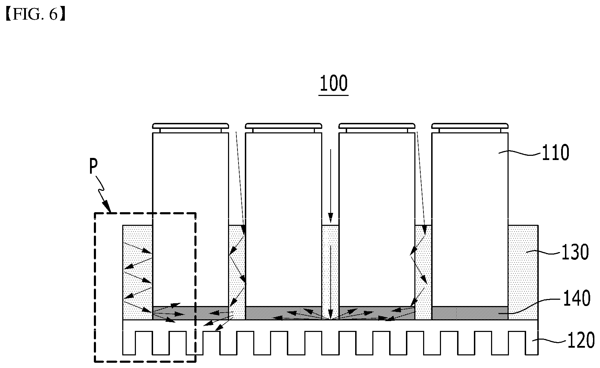

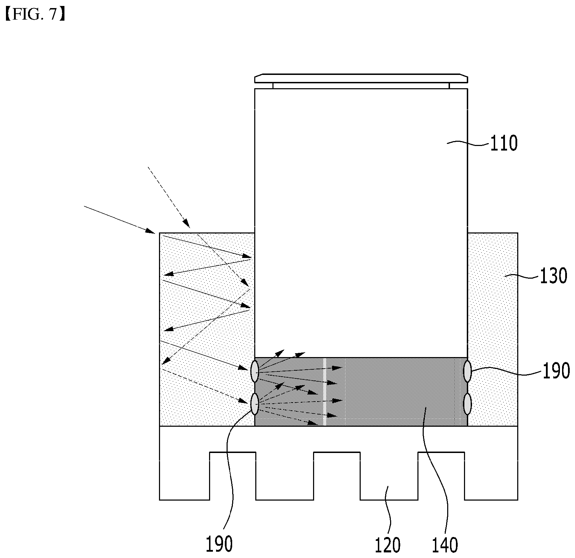

An adhesive formed of a photocurable resin is applied to the plurality of holes 130h formed in the cell frame 130, and the adhesive is photocured to thereby form the adhesive layer 140 shown in Fig. 3, and the battery cell 110 may be fixed to the bottom plate 120 by the adhesive layer 140. A process of forming the adhesive layer 140 by photocuring will be described in detail with reference to Figs. 6 and 7.

Fig. 6 is a diagram showing a state in which the adhesive layer of Fig. 5 is cured. Fig. 7 is an enlarged view of region P of Fig. 6.

Referring to Figs. 5 to 7, when light generated from the light source unit 170 disposed inside the chamber 160 is irradiated toward the battery module 100, light enters into the cell frame 130 having light transmittance. Light entering the cell frame 130 may have several paths.

The battery cell 110 may be a can-type secondary battery, and the electrode assembly included in the battery cell 110 may be wrapped in a case made of metal. The light that has entered the cell frame 130 is totally reflected, and may be emitted to the outside of the cell frame 130 when it encounters a diffuse reflection member 190 described below. Therefore, according to the present embodiment, light entering the cell frame 130 can be emitted at the target portion.

At this time, according to the present embodiment, as the cell frame 130 is made of a resin that generates total internal reflection into the cell frame 130, light entering the cell frame 130 can be prevented from escaping to the outside of the cell frame 130. In other words, after light enters the cell frame 130 having light transmittance, it may be totally reflected into the cell frame 130 so that it does not escape to the outside of the cell frame 130. Therefore, since the light entering the cell frame 130 is confined inside the cell frame 130, light efficiency can be increased. A resin forming the cell frame 130 may have a high refractive index compared to a medium outside the cell frame 130. In one example, the resin forming the cell frame 130 may be polymethyl methacrylate (PMMA) or polycarbonate (PC).

In this manner, in order for a plurality of light paths to be formed inside the cell frame 130 and for such light to form the adhesive layer 140, the light must be able to reach an adhesive made of a thermosetting resin applied between the battery cell 110 and the bottom plate. According to the invention, a diffuse reflection member 190 is formed on a part of the surface of the cell frame 130 as shown in Fig. 7. As an example of the diffuse reflection member 190, the diffuse reflection pattern 190 can be formed in various patterns that cause diffuse reflection, such as intaglios and embossments. The diffuse reflection member 190 may be formed on a boundary surface between the cell frame 130 and the adhesive layer 140. Light that entered the cell frame 130 passes through the diffuse reflection pattern 190 and is emitted to the adhesive layer 140 so that the adhesive layer 140 can be photocured.

In the present embodiment, the diffuse reflection member 190 has been described as a diffuse reflection pattern, but is not limited thereto, and the diffuse reflection member 190 may also include a case where particles are put therein to cause diffuse reflection.

The plurality of light paths formed inside the cell frame 130 may be generated by bending paths of light entering from the outside of the cell frame 130 several times inside the cell frame 130.

The cell frame 130 according to the present embodiment can be formed by injection molding, and during injection molding, the above-mentioned diffuse reflection pattern 190 may be simultaneously formed on the surface of the cell frame 130.

Due to the diffuse reflection pattern 190 formed on the surface of the cell frame 130 according to the present invention, the curing time of the photocurable resin for fixing the battery cell 110 to the bottom plate 120 can be significantly reduced.

Meanwhile, one or more battery modules according to one embodiment of the present disclosure can be packaged in a pack case to form a battery pack. The battery module and the battery pack including the same as set forth above can be applied to various devices. Such a device can be applied to a vehicle means such as an electric bicycle, an electric vehicle, or a hybrid vehicle, but the present disclosure is not limited thereto, and is applicable to various devices that can use a battery module and a battery pack including the same.

### [Description of Reference Numerals]

| | | | |
|---|---|---|---|
| 100: | battery module | 10: | battery cell |
| 120: | bottom plate | 130: | cell frame |
| 130h: | hole | 140: | adhesive layer |
| 160: | chamber | 170: | light source unit |
| 190: | diffuse reflection pattern | | |

## Claims

1. A battery module (100) comprising:
a bottom plate (120),
a cell frame (130) located on the bottom plate,
a plurality of battery cells (110) mounted to the cell frame, and
an adhesive layer (140) located between the bottom plate and the plurality of battery cells,
wherein the cell frame has light transmittance,
wherein the cell frame is formed of a resin that generates total internal reflection into the cell frame,
wherein said resin has a higher refractive index than a medium outside the cell frame,
**characterized in that** a diffuse reflection member (190) is formed on a part of the surface of the cell frame.

2. The battery module according to claim 1, wherein:
the adhesive layer is formed of a photocurable resin.

3. The battery module according to claim 1, wherein:
the cell frame is formed with a plurality of holes for mounting the battery cells.

4. The battery module according to claim 3, wherein:
the adhesive layer is formed in the plurality of holes and contacts at least one of the bottom plate and the bottom portion of the battery cell.

5. The battery module according to claim 1, wherein:
the resin has a transmittance of 90% or more.

6. The battery module according to claim 1, wherein:
the diffuse reflection member is formed on a boundary surface between the cell frame and the adhesive layer.

7. The battery module according to claim 6, wherein:
a light that entered the cell frame passes through the diffuse reflection member and is emitted to the adhesive layer, so that the adhesive layer is photo-cured.

8. The battery module according to claim 1, wherein:
the adhesive layer includes a photocuring initiator.

9. The battery module according to claim 1, wherein:
the bottom plate is a cooling plate.

10. The battery module according to claim 1, wherein:
the battery cell is cylindrical.

11. The battery module according to claim 1, wherein:
the bottom plate and the cell frame are integrally formed.

12. The battery module according to claim 1, wherein:
a plurality of light paths are formed inside the cell frame.

13. A battery pack comprising the battery module as set forth in claim 1.

## Patentansprüche

1. Batteriemodul (100), umfassend:
eine untere Platte (120),
einen Zellenrahmen (130), welcher auf der unteren Platte angeordnet ist,
eine Mehrzahl von Batteriezellen (110), welche an dem Zellenrahmen montiert sind, und
eine adhäsive Schicht (140), welche zwischen der unteren Platte und der Mehrzahl von Batteriezellen angeordnet ist,
wobei der Zellenrahmen eine Lichtdurchlässigkeit aufweist,
wobei der Zellenrahmen aus einem Harz gebildet ist, welches eine vollständige interne Reflexion in den Zellenrahmen erzeugt,
wobei das Harz einen höheren Brechungsindex aufweist als ein Medium außerhalb des Zellenrahmens,
**dadurch gekennzeichnet, dass** ein diffuses Reflexionselement (190) an einem Teil der Fläche des Zellenrahmens gebildet ist.

2. Batteriemodul nach Anspruch 1, wobei:
die adhäsive Schicht aus einem photohärtbaren Harz gebildet ist.

3. Batteriemodul nach Anspruch 1, wobei:
der Zellenrahmen mit einer Mehrzahl von Löchern zum Montieren der Batteriezellen gebildet ist.

4. Batteriemodul nach Anspruch 3, wobei:
die adhäsive Schicht in der Mehrzahl von Löchern gebildet ist und wenigstens eines aus der unteren Platte und dem unteren Abschnitt der Batteriezelle kontaktiert.

5. Batteriemodul nach Anspruch 1, wobei:
das Harz eine Durchlässigkeit von 90 % oder mehr aufweist.

6. Batteriemodul nach Anspruch 1, wobei:
das diffuse Reflexionselement an einer Grenzfläche zwischen dem Zellenrahmen und der adhäsiven Schicht gebildet ist.

7. Batteriemodul nach Anspruch 6, wobei:
ein Licht, welches in den Zellenrahmen eingetreten ist, durch das diffuse Reflexionselement hindurchtritt und zu der adhäsiven Schicht emittiert wird, so dass die adhäsive Schicht photogehärtet wird.

8. Batteriemodul nach Anspruch 1, wobei:
die adhäsive Schicht einen photohärtenden Initiator umfasst.

9. Batteriemodul nach Anspruch 1, wobei:
die untere Platte eine Kühlplatte ist.

10. Batteriemodul nach Anspruch 1, wobei:
die Batteriezelle zylindrisch ist.

11. Batteriemodul nach Anspruch 1, wobei:
die untere Platte und der Zellenrahmen integral gebildet sind.

12. Batteriemodul nach Anspruch 1, wobei:
eine Mehrzahl von Lichtwegen innerhalb des Zellenrahmens gebildet ist.

13. Batteriepack, umfassend das Batteriemodul nach Anspruch 1.

## Revendications

1. Module de batterie (100) comprenant :
une plaque de fond (120) ;
un cadre de cellules (130) situé sur la plaque de fond,
une pluralité de cellules de batterie (110) montées sur le cadre de cellules, et
une couche adhésive (140) située entre la plaque de fond et la pluralité de cellules de batterie,
dans lequel le cadre de cellules présente une transmittance de lumière,
dans lequel le cadre de cellules est formé d'une résine qui génère une réflexion interne totale dans le cadre de cellules,
dans lequel ladite résine présente un indice de réfraction plus élevé qu'un milieu à l'extérieur du cadre de cellules,
**caractérisé en ce qu'**un organe de réflexion diffuse (190) est formé sur une partie de la surface du cadre de cellules.

2. Module de batterie selon la revendication 1, dans lequel :
la couche adhésive est formée d'une résine photo-durcissable.

3. Module de batterie selon la revendication 1, dans lequel :
le cadre de cellules est formé d'une pluralité de trous pour le montage des cellules de batterie.

4. Module de batterie selon la revendication 3, dans lequel :
la couche adhésive est formée dans la pluralité de trous et entre en contact avec au moins l'une de la plaque de fond et de la partie de fond de la cellule de batterie.

5. Module de batterie selon la revendication 1, dans lequel :
la résine présente une transmittance de 90 % ou plus.

6. Module de batterie selon la revendication 1, dans lequel :
l'organe de réflexion diffuse est formé sur une surface limite entre le cadre de cellules et la couche adhésive.

7. Module de batterie selon la revendication 6, dans lequel :
une lumière qui est entrée dans le cadre de cellules traverse l'organe de réflexion diffuse et est émise vers la couche adhésive, de sorte que la couche adhésive est photo-durcie.

8. Module de batterie selon la revendication 1, dans lequel :
la couche adhésive comporte un initiateur de photo-durcissement.

9. Module de batterie selon la revendication 1, dans lequel :
la plaque de fond est une plaque de refroidissement.

10. Module de batterie selon la revendication 1, dans lequel :
la cellule de batterie est cylindrique.

11. Module de batterie selon la revendication 1, dans lequel :
la plaque de fond et le cadre de cellules sont formés d'un seul tenant.

12. Module de batterie selon la revendication 1, dans lequel :
une pluralité de chemins lumineux sont formés à l'intérieur du cadre de cellules.

13. Bloc-batterie comprenant le module de batterie selon la revendication 1.
